# EUROPEAN PATENT APPLICATION

(11) **EP 3 838 648 A1**
(43) Date of publication of application: **23.06.2021**
(21) Application number: 20211586.1
(22) Date of filing: 03.12.2020
(51) Int. Cl.: B60L 1/00, B60H 1/00, B60P 3/20, B60L 53/14, B60L 58/18

(54) **REFRIGERATED TRUCK/TRAILER WITH UNIFIED CHARGING PORT**

(30) Priority: 18.12.2019 US 201962949493 P
(71) Applicant: Carrier Corporation, Palm Beach Gardens, FL 33418 (US)
(72) Inventor: SHE, XU, Bloomfield, Connecticut 06002 (US)
(74) Representative: Dehns

(57) **Abstract**

A system and method for recharging a vehicle battery (410) and a refrigeration unit battery (310) with a charging station (200) using a unified charging port (110) are provided. The charging port (110) is configured to receive electrical power from the charging station (200). The vehicle power train system (400) and the refrigeration unit system (300) are configured to be in connection with the charging port (110). The vehicle power train system (400) receives electrical power from the charging station (200) and stores the electrical power, at a vehicle power train system voltage, in a vehicle battery (410). The refrigeration unit system (300) receives electrical power from the charging station (200) and stores the electrical power, at a refrigeration unit system voltage, in a refrigeration unit battery (310). The refrigeration unit system (300), in the refrigeration electrical system (320), converts the electrical power from the refrigeration unit battery (310) to mechanical energy.

## Description

Refrigerated trucks and trailers are commonly used to transport perishable goods, such as, for example, produce, meat, poultry, fish, dairy products, cut flowers, and other fresh or frozen perishable products. To maintain the perishable goods, typically, a transport refrigeration unit is mounted to the truck or to the trailer. The transport refrigeration unit can be driven either mechanically (ex. a direct mechanical coupling or belt drive) or electrically. When mechanically driven, the transport refrigeration unit derives power from the vehicle engine. When electrically driven, the transport refrigeration unit can derive power either from a generator or an onboard battery.

Vehicles, including refrigerated trucks and trailers, are moving away from fossil fuel and toward electric power as an energy source. Electric vehicles use one or more electric motor for propulsion. To supply power to drive the one or more electric motor, electric vehicles commonly use one or more onboard vehicle battery. When paired with an electrically driven transport refrigeration unit, the onboard vehicle battery can be used to drive both the vehicle and the refrigeration unit. As an alternative to a shared battery system, separate batteries may be used. For example, the electric vehicle may have a battery separate from the refrigeration unit battery.

When having separate batteries, it is common for each battery to have a separate charging port. Each charging port typically has its own connection to the charging station. With each charging station having a limited number of connections available, using multiple connections for a single electrically powered refrigerated truck greatly reduces the number of electrically powered refrigerated trucks that may be charged by each charging station.

Accordingly, there remains a need for a more efficient system for recharging a vehicle battery and a refrigeration unit battery of an electrically powered refrigerated truck.

According to a first aspect the invention provides a system for recharging a vehicle battery and a refrigeration unit battery with a charging station. The charging station provides electrical power at a charging station voltage. The system includes a charging port, a vehicle power train system, and a refrigeration unit system. The charging port receives electrical power from the charging station. The vehicle power train system is in connection with the charging port, the vehicle power train system receives electrical power from the charging port. The vehicle power train system includes a vehicle battery for storing the electrical power at a vehicle power train system voltage. The refrigeration unit system is in connection with the charging port. The refrigeration unit system receives electrical power from the charging port. The refrigeration unit system includes a refrigeration unit battery and a refrigeration electrical system. The refrigeration unit battery stores electrical power at a refrigeration unit system voltage. The refrigeration electrical system converts the electrical power from the refrigeration unit battery to a mechanical energy.

Optionally, the vehicle power train system further includes a vehicle electrical system for converting the electrical power from the vehicle battery to a mechanical energy.

Optionally, the electrical power is transferable between the vehicle power train system and the refrigeration unit system.

Optionally, the charging station is a direct current (DC) charging station.

Optionally, the vehicle power train system further includes a vehicle DC to DC converter for converting the electrical power from the charging station voltage to the vehicle power train system voltage, the electrical power converted by the vehicle DC to DC converter being stored by the vehicle battery.

Optionally, the refrigeration unit system further includes a refrigeration DC to DC converter for converting the electrical power from the charging station voltage to the refrigeration unit system voltage, the electrical power converted by the refrigeration DC to DC converter being stored by the refrigeration unit battery.

Optionally, the charging station is an alternating current (AC) charging station.

Optionally, the charging port includes an AC to DC converter for converting the electrical power from an alternating current (AC) to a direct current (DC).

Optionally, the vehicle power train system further includes a vehicle DC to DC converter for converting the electrical power to a vehicle power train system voltage, the electrical power converted by the vehicle DC to DC converter being stored by the vehicle battery.

Optionally, the refrigeration unit system further includes a refrigeration DC to DC converter for converting the electrical power to a refrigeration unit system voltage, the electrical power converted by the refrigeration DC to DC converter being stored by the refrigeration unit battery.

Optionally, the vehicle power train system further includes a vehicle AC to DC converter for converting the electrical power from an alternating current (AC) to a direct current (DC), the electrical power converted by the vehicle AC to DC converter being stored by the vehicle battery.

Optionally, the refrigeration unit system further includes a refrigeration AC to DC converter for converting the electrical power from an alternating current (AC) to a direct current (DC), the electrical power converted by the refrigeration AC to DC converter being stored by the refrigeration unit battery.

Optionally, the electrical power converted by the AC to DC converter is stored by the vehicle battery.

Optionally, the electrical power converted by the AC to DC converter is stored by the refrigeration unit battery.

According to another aspect, the invention provides a method for recharging a vehicle battery and a refrigeration unit battery with a charging station. The charging station provides an electrical power at a charging station voltage. The method includes receiving, at a charging port, the electrical power from the charging station; transferring, to a vehicle power train system, the electrical power from the charging port, the vehicle power train system storing, in a vehicle battery, the electrical power at a vehicle power train system voltage; and transferring, to a refrigeration unit system, the electrical power from the charging port, the refrigeration unit system, in a refrigeration unit battery, storing the electrical power at a refrigeration unit system voltage, and converting, in a refrigeration electrical system, the electrical power from the vehicle battery to a mechanical energy.

Optionally, the vehicle power train system further includes a vehicle electrical system, the vehicle electrical system converts electrical power from the vehicle battery to a mechanical energy.

Optionally, the method further includes transferring the electrical power between the vehicle power train system and the refrigeration unit system.

Optionally, the charging station is a direct current (DC) charging station.

Optionally, the vehicle power train system converts, in a vehicle DC to DC converter, the electrical power from a charging station voltage to a vehicle power train system voltage, the electrical power converted by the vehicle DC to DC converter being stored by the vehicle battery.

Optionally, the refrigeration unit system converts, in a refrigeration DC to DC converter, the electrical power from a charging station voltage to a refrigeration unit system voltage, the electrical power converted by the refrigeration DC to DC converter being stored by the refrigeration unit battery.

Optionally, the charging station is an alternating current (AC) charging station.

Optionally, the charging port includes an AC to DC converter for converting the electrical power from an alternating current (AC) to a direct current (DC).

Optionally, the vehicle power train system converts, in a vehicle DC to DC converter, the electrical power to a vehicle power train system voltage, the electrical power converted by the vehicle DC to DC converter being stored by the vehicle battery.

Optionally, the refrigeration unit system converts, in a refrigeration DC to DC converter, the electrical power to a refrigeration unit system voltage, the electrical power converted by the refrigeration DC to DC converter being stored by the refrigeration unit battery.

Optionally, the vehicle power train system converts, in a vehicle AC to DC converter, the electrical power from an alternating current (AC) to a direct current (DC), the electrical power converted by the vehicle AC to DC converter being stored by the vehicle battery.

Optionally, the refrigeration unit system converts, in a refrigeration AC to DC converter, the electrical power from an alternating current (AC) to a direct current (DC), the electrical power converted by the refrigeration AC to DC converter being stored by the refrigeration unit battery.

Optionally the electrical power converted by the AC to DC converter is stored by the vehicle battery.

Optionally, the electrical power converted by the AC to DC converter is stored by the refrigeration unit battery.

The following descriptions of the drawings should not be considered limiting in any way. With reference to the accompanying drawings, like elements are numbered alike:
FIG. 1 is a schematic illustration of an electrically powered refrigerated vehicle with a unified charging port.
FIG. 2 is a schematic illustration of a system for recharging a vehicle battery and a refrigeration unit battery with a charging station.
FIG. 3 is a schematic illustration of a system for recharging a vehicle battery and a refrigeration unit battery with a charging station.
FIG. 4 is a schematic illustration of a system for recharging a vehicle battery and a refrigeration unit battery with a charging station.
FIG. 5 is a schematic illustration of a system for recharging a vehicle battery and a refrigeration unit battery with a charging station.
FIG. 6 is a schematic illustration of a system for recharging a vehicle battery and a refrigeration unit battery with a charging station.
FIG. 7 is a schematic illustration of a system for recharging a vehicle battery and a refrigeration unit battery with a charging station.

A system and method for charging a vehicle battery and a refrigeration unit battery are provided. The system and method provide a more efficient way to charge the separate batteries, when compared to common charging systems. Instead of requiring multiple connections to the charging station, one unified charging port is used to charge both the vehicle battery and the refrigeration unit battery. By reducing the required number of connections for each electrically powered refrigerated vehicle, each charging station may provide power to an increased number of electrically powered refrigerated vehicles.

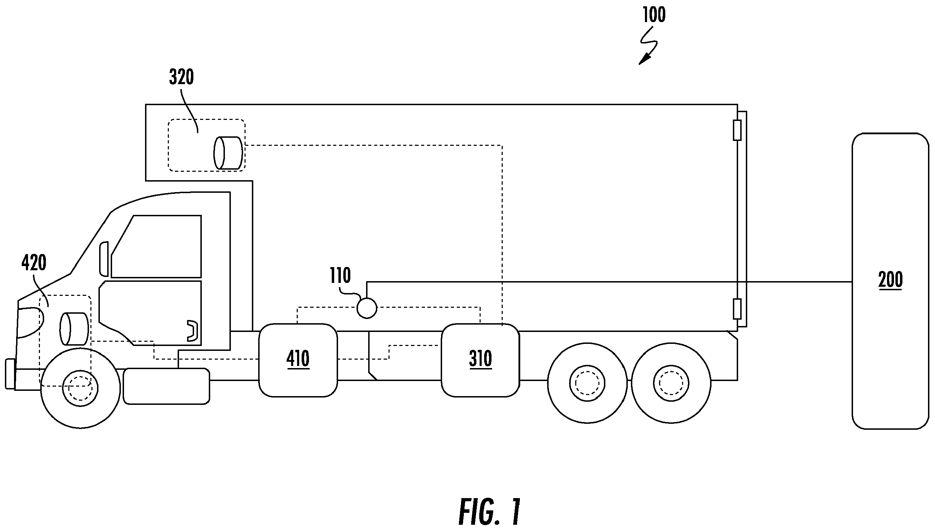

With reference now to the Figures, a schematic illustration of an electrically powered refrigerated vehicle with a unified charging port, in accordance with various aspects of the disclosure, is shown in FIG. 1. As shown in FIG. 1, the electrically powered refrigerated vehicle 100, in certain instances, includes a charging port 110, a vehicle battery 410, and a refrigeration unit battery 310. The charging port 110 is configured to receive electrical power from the charging station 200. The vehicle battery 410 is configured to store electrical power at a vehicle power train system voltage. The refrigeration unit battery 310 is configured to store electrical power at a refrigeration unit system voltage. The electrically powered refrigerated vehicle 100 may include a refrigeration electrical system 320 to convert the electrical power from the refrigeration unit battery 310 to a mechanical energy (ex. to circulate the refrigerant). The electrically powered refrigerated vehicle 100 may include a vehicle electrical system 420 to convert the electrical power from the vehicle battery 410 to a mechanical energy (ex. to propel the vehicle).

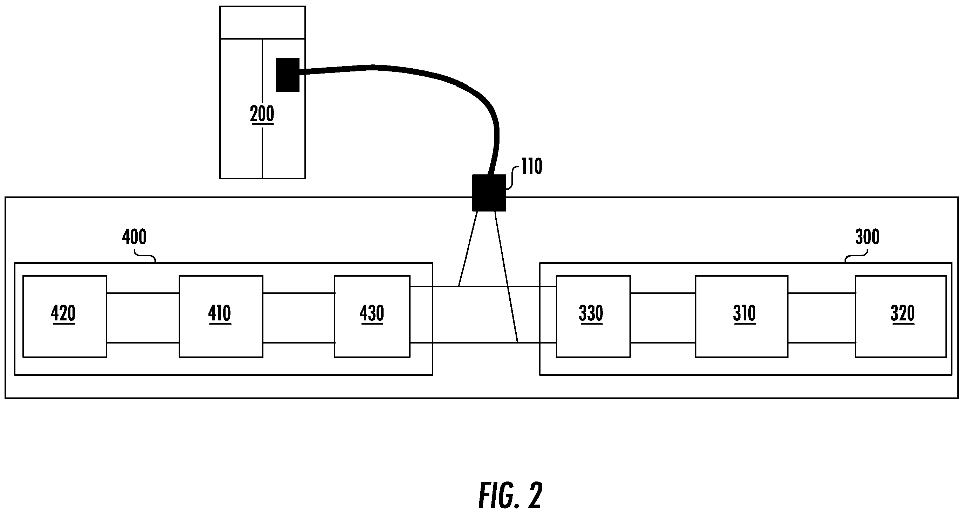

As shown in FIG. 2, in certain instances, the vehicle battery 410 is part of a vehicle power train system 400, and the refrigeration unit battery 310 is part of a refrigeration unit system 300. The vehicle power train system 400 may, in certain instances, be in connection with the charging port 110 to receive electrical power from the charging port 110. The refrigeration unit system 300 may, in certain instances, be in connection with the charging port 110 to receive electrical power from the charging port 110. In certain instances, the electrical power is transferrable between the vehicle power train system 400 and the refrigeration unit system 300.

The charging station 200 may, in certain instances, be a direct current (DC) charging station 200. The charging station 200 may include a battery management system (not shown) to detect (ex. automatically) the vehicle battery 410 and/or the refrigeration unit battery 310. The battery management system of the charging station 200 may set the voltage of the electrical power based on the detection of the vehicle battery 410 and/or the refrigeration unit battery 310. The battery management system of the charging station 200 may, in certain instances, choose a suitable voltage that will work for both the vehicle battery 410 and the refrigeration unit battery 310. The battery management system of the charging station 200 may, in certain instances, choose a suitable voltage that will work for either the vehicle battery 410 or the refrigeration unit battery 310.

Depending, at least in part, on the size of the vehicle 100, weight of the vehicle 100, and/or the current charge (ex. full, partially charged, or empty) of the vehicle battery 410, the voltage of the vehicle battery 410 may be between 400 volts and 800 volts. In certain instances, the voltage of the vehicle battery 410 is between 400 volts and 700 volts, between 400 volts and 600 volts, between 400 volts and 500 volts, between 500 volts and 800 volts, between 500 volts and 700 volts, between 500 volts and 600 volts, between 600 volts and 800 volts, between 600 volts and 700 volts, between 700 volts and 800 volts.

Depending, at least in part on the size of the refrigeration unit system 300, and/or the current charge (ex. full, partially charged, or empty) of the refrigeration unit battery 310, the voltage of the refrigeration unit battery 310 may be between 300 and 600 volts. In certain instances, the voltage of the refrigeration unit battery 310 is between 300 volts and 500 volts, between 300 volts and 400 volts, between 400 volts and 600 volts, between 400 volts and 500 volts, between 500 volts and 600 volts.

Regardless of the respective voltages the vehicle battery 410 and the refrigeration unit battery 310, the charging station 200, in certain instances, through the battery management system chooses a suitable voltage. To convert the electrical power from the charging station 200 voltage to the vehicle power train system 400 voltage, the vehicle power train system 400 may include a vehicle converter 430. This vehicle converter 430 may be a DC to DC converter when the charging station 200 is a DC charging station 200. To convert the electrical power from the charging station 200 voltage to the refrigeration unit system 300 voltage, the refrigeration unit system 300 may include a refrigeration converter 330. This refrigeration converter 330 may be a DC to DC converter when the charging station 200 is a DC charging station.

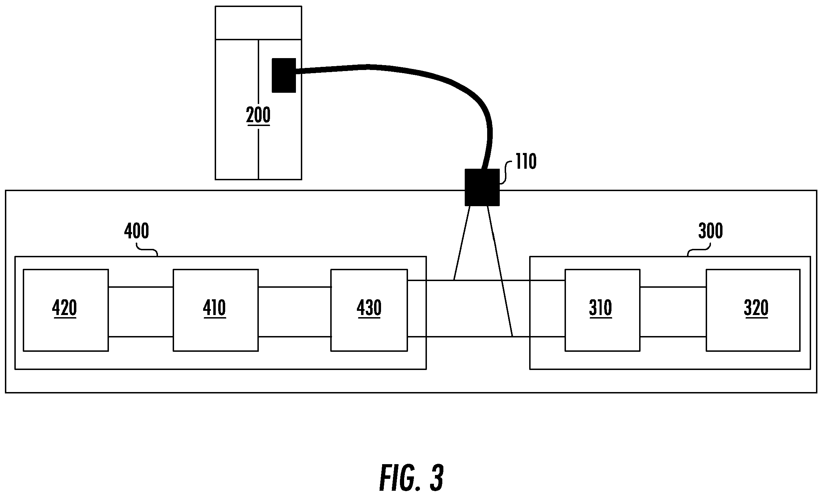

In certain instances, as shown in FIG. 3, only the vehicle power train system 400 includes a converter 430. When only the vehicle power train system 400 includes a converter 430, the battery management system of the charging station 200 may choose a voltage suitable to the refrigeration unit system 300. The vehicle converter 430 may be used to convert the electrical power from the charging station 200 voltage to the vehicle power train system 400 voltage.

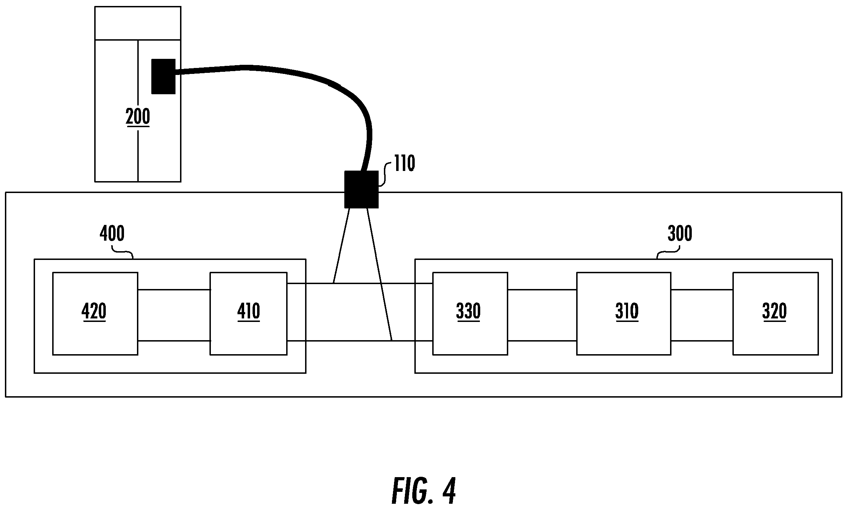

In certain instances, as shown in FIG. 4, only the refrigeration unit system 300 includes a converter 330. When only the refrigeration unit system 300 includes a converter 330, the battery management system of the charging station 200 may choose a voltage suitable to the vehicle power train system 300. The refrigeration converter 330 may be used to convert the electrical power from the charging station 200 voltage to the refrigeration unit system 300 voltage.

In certain instances, the charging station 200 is an alternating current (AC) charging station 200. When the charging station 200 is an AC charging station 200, the vehicle converter 430 may be an AC to DC vehicle converter 430. The electrical power converted by the AC to DC vehicle converter is stored by the vehicle battery 410. When the charging station 200 is an AC charging station 200, the refrigeration converter 330 may be an AC to DC refrigeration converter 330. The electrical power converted by the AC to DC refrigeration converter 330 is stored by the refrigeration unit battery 310.

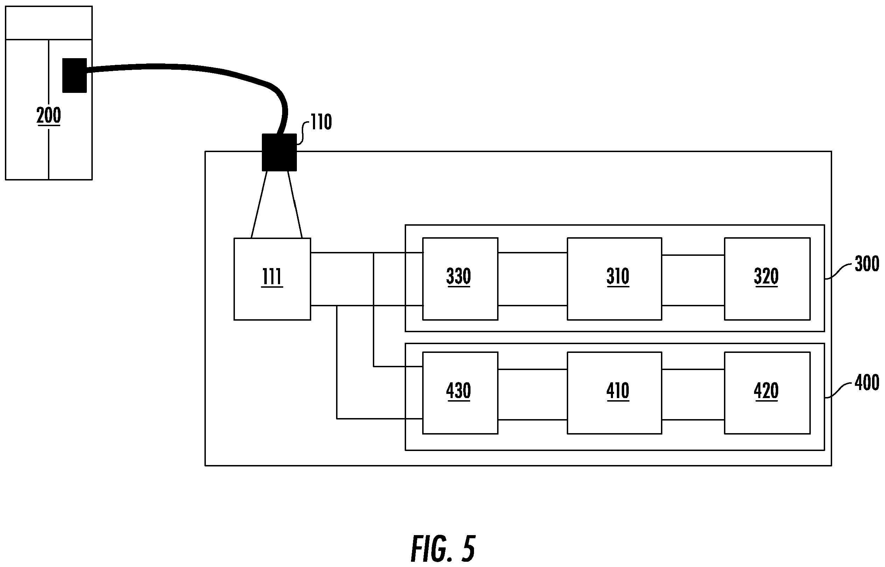

When the charging station 200 is an AC charging station 200, the charging port 110 may include an AC to DC charging port converter 111 for converting the electrical power from an alternating current (AC) to a direct current (DC). As shown in FIG. 5, when a charging port converter 111 is used both the vehicle power train system 400 and the refrigeration unit system 300 may include converters 430, 330, respectively. These converters 430, 330 may be DC to DC converters. The DC to DC vehicle converter 430 may be used to convert the electrical power to a vehicle power train system 400 voltage. The DC to DC refrigeration converter 330 may be used to convert the electrical power to a refrigeration unit system 300 voltage. When both the vehicle power train system 400 and the refrigeration unit system 300 include converters 430, 330, respectively, the battery management system of the charging station 200 may choose a suitable voltage for both the vehicle power train system 400 and the refrigeration unit system 300.

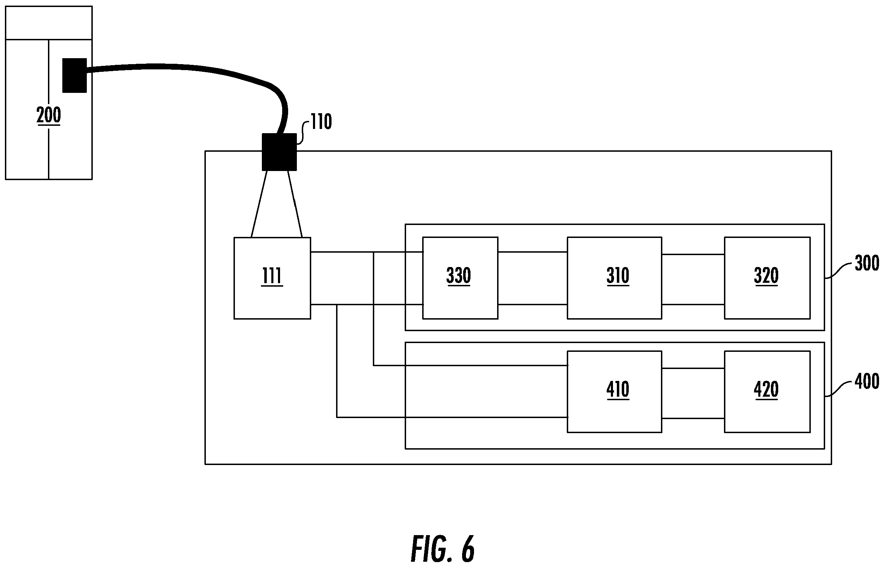

In certain instances, as shown in FIG. 6, only the refrigeration unit system 300 includes a DC to DC converter 330. When only a DC to DC refrigeration converter 330 is used, the battery management system of the charging station 200 may choose a suitable voltage for the vehicle power train system 400. The DC to DC refrigeration converter 330 may be used to convert the electrical power from a charging station 200 voltage to a refrigeration unit system 300 voltage.

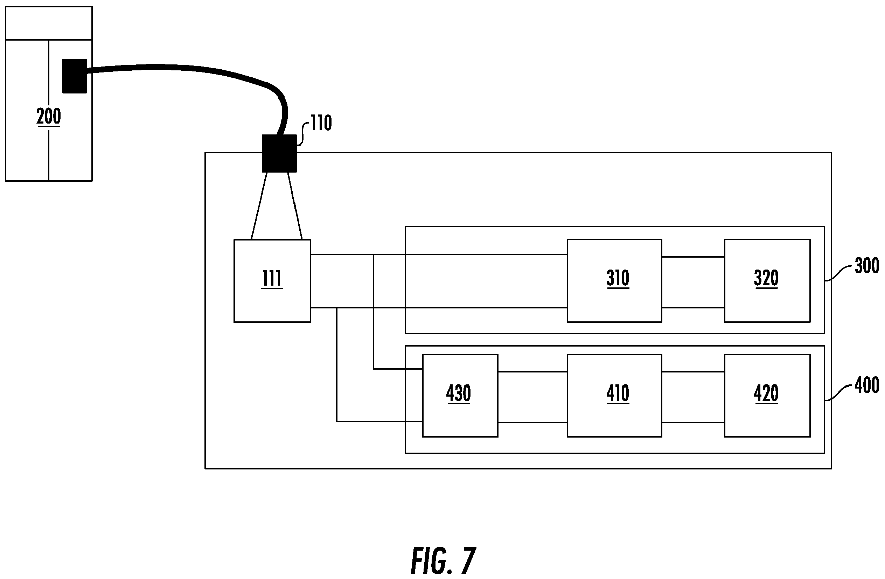

In certain instances, as shown in FIG. 7, only the vehicle power train system 400 includes a DC to DC converter 430. When only a DC to a DC vehicle converter 430 is used, the battery management system of the charging station 200 may choose a suitable voltage for the refrigeration unit system 400. The DC to DC vehicle converter 430 may be used to convert the electrical power from a charging station 200 voltage to a vehicle power train system 300 voltage.

In certain instances, the charging station 200 is an AC charging station 200, the charging port 110 does not include an AC to DC converter 111, and both the vehicle power train system 400 and the refrigeration unit system 300 include AC to DC converters 430, 330, respectively. As described above, in connection with a DC charging station 200 when describing FIG. 2, this configuration may visually look the same, however, the charging station 200 is an AC charging station 200 and the converters 330, 430 are AC to DC converters. The vehicle AC to DC converter 430 may be used to convert the electrical power from a charging station alternating current (AC) voltage to a direct current (DC) to a vehicle power train system 400 voltage. The refrigeration AC to DC converter 330 may be used to convert the electrical power from a charging station alternating current (AC) voltage to a direct current (DC) to a refrigeration unit system 300 voltage.

The various configurations of the system enable a more efficient method for recharging a vehicle battery and a refrigeration unit battery with a charging station. The method may be completed, for example, using the exemplary configurations shown in FIGs. 1-7. Regardless of the configuration, the method provides for the recharging of a vehicle battery and a refrigeration unit battery with a charging station, the charging station supplying electrical power at a charging station voltage. The method provides for the receiving, at a charging port, electrical power from the charging station. The method further provides for the transferring of electrical power from the charging port to a vehicle power train system. The vehicle power train system stores the electrical power at a vehicle power train system voltage in a vehicle battery. The method additionally provides for the transferring of electrical power from the charging port to a refrigeration unit system. The refrigeration unit system stores the electrical power at a refrigeration unit system voltage in a refrigeration unit battery. When used by the refrigeration unit system, a refrigeration electrical system may be used to convert the electrical power from the vehicle battery to a mechanical energy. When used by the vehicle power train system, a vehicle electrical system may be used to convert the electrical power from the vehicle battery to a mechanical energy. It is envisioned that this method, through various configurations, may be used with either an AC charging station or a DC charging station.

While the present disclosure has been described with reference to an exemplary embodiment or embodiments, it will be understood by those skilled in the art that various changes may be made and equivalents may be substituted for elements thereof without departing from the scope of the present invention as defined by the claims. In addition, many modifications may be made to adapt a particular situation or material to the teachings of the present disclosure. Therefore, it is intended that the present invention not be limited to the particular embodiment for carrying out this present disclosure, but that the present invention will include all embodiments falling within the scope of the claims.

## Claims

1. A system for recharging a vehicle battery (410) and a refrigeration unit battery (310) with a charging station (200), the charging station providing an electrical power at a charging station voltage, the system comprising:
a charging port (110) for receiving the electrical power from the charging station (200);
a vehicle power train system (400) in connection with the charging port, the vehicle power train system receiving the electrical power from the charging port, the vehicle power train system comprising:
a vehicle battery (410) for storing the electrical power at a vehicle power train system voltage; and
a refrigeration unit system (300) in connection with the charging port (110), the refrigeration unit system receiving the electrical power from the charging port, the refrigeration unit system comprising:
a refrigeration unit battery (310) for storing the electrical power at a refrigeration unit system voltage; and
a refrigeration electrical system (320) for converting the electrical power from the refrigeration unit battery to a mechanical energy.

2. The system of claim 1, wherein the charging station (200) is a direct current (DC) charging station.

3. The system of claim 2, wherein the vehicle power train system (400) further comprises a vehicle DC to DC converter for converting the electrical power from the charging station voltage to the vehicle power train system voltage, the electrical power converted by the vehicle DC to DC converter being stored by the vehicle battery (410).

4. The system of claim 2 or 3, wherein the refrigeration unit system (300) further comprises a refrigeration DC to DC converter for converting the electrical power from the charging station voltage to the refrigeration unit system voltage, the electrical power converted by the refrigeration DC to DC converter being stored by the refrigeration unit battery (310).

5. The system of claim 1, wherein the charging station (200) is an alternating current (AC) charging station.

6. The system of claim 5, wherein the charging port (110) comprises an AC to DC converter for converting the electrical power from an alternating current (AC) to a direct current (DC).

7. The system of claim 6, wherein the vehicle power train system (400) further comprises a vehicle DC to DC converter for converting the electrical power to a vehicle power train system voltage, the electrical power converted by the vehicle DC to DC converter being stored by the vehicle battery (410).

8. The system of claim 6 or 7, wherein the refrigeration unit system (300) further comprises a refrigeration DC to DC converter for converting the electrical power to a refrigeration unit system voltage, the electrical power converted by the refrigeration DC to DC converter being stored by the refrigeration unit battery (310).

9. The system of any of claims 5 to 8, wherein the vehicle power train system (400) further comprises a vehicle AC to DC converter for converting the electrical power from an alternating current (AC) to a direct current (DC), the electrical power converted by the vehicle AC to DC converter being stored by the vehicle battery (410).

10. The system of any of claims 5 to 9, wherein the refrigeration unit system (300) further comprises a refrigeration AC to DC converter for converting the electrical power from an alternating current (AC) to a direct current (DC), the electrical power converted by the refrigeration AC to DC converter being stored by the refrigeration unit battery (310).

11. A method for recharging a vehicle battery (410) and a refrigeration unit battery (310) with a charging station (200), the charging station providing an electrical power at a charging station voltage, the method comprising:
receiving, at a charging port (110), the electrical power from the charging station (200);
transferring, to a vehicle power train system (400), the electrical power from the charging port, the vehicle power train system storing, in a vehicle battery (410), the electrical power at a vehicle power train system voltage; and
transferring, to a refrigeration unit system (300), the electrical power from the charging port, the refrigeration unit system, in a refrigeration unit battery (410), storing the electrical power at a refrigeration unit system voltage, and converting, in a refrigeration electrical system, the electrical power from the vehicle battery (410) to a mechanical energy.

12. The method of claim 11 comprising using a system as claimed in any of claims 1 to 10.
